# FASCICULE DE BREVET EUROPEEN

(11) **EP 3 842 269 B1**
(45) Date de publication et mention de la délivrance du brevet: **06.05.2026**
(21) Numéro de dépôt: 20216984.3
(22) Date de dépôt: 23.12.2020
(51) Int. Cl.: B60J 7/06

(54) **DISPOSITIF AUTOMATISE DE COUVERTURE D'UN CONTENANT AVEC UNE BACHE**
AUTOMATISCHE VORRICHTUNG ZUM ABDECKEN EINES CONTAINERS MIT EINER PLANE
AUTOMATED DEVICE FOR COVERING A CONTAINER WITH A TARPAULIN

(30) Priorité: 26.12.2019 FR 1915634
(43) Date de publication de la demande: 30.06.2021
(73) Titulaire: Cramaro France Sàrl, 91150 Morigny-Champigny (FR)
(72) Inventeur: MARTELLIERE, Vincent, 37270 AZAY SUR CHER (FR)
(74) Mandataire: Cabinet Boettcher

(56) Documents cités:
- US-A- 2 807 499
- US-A- 4 342 480

## Description

### ARRIERE PLAN DE L'INVENTION

La présente invention concerne le domaine du stockage et du transport de matériaux dans des contenants bâchés (par « bâche », on entend dans la suite de la description tout morceau de toile, étanche ou non, plastifiée ou non, ou tout film plastique, utilisable pour recouvrir un contenant).

Différents dispositifs existent pour couvrir des contenants, tels que bennes, plateaux, silos rectangulaires, bassins, piscines... à l'aide d'une bâche. Il est par exemple connu de disposer d'un rouleau de bâche sur l'un des côtés du contenant, rouleau qui sera actionné mécaniquement ou manuellement pour dérouler la bâche et couvrir ainsi le contenant ou enrouler la bâche et ainsi découvrir le contenant. Ce dispositif de bâchage nécessite de disposer d'une place suffisante à côté ou au-dessus du contenant pour y fixer le rouleau. En outre, selon ce dispositif, la bâche déroulée affleurera les bords du contenant, un tel dispositif est adapté pour couvrir les bassins et piscines mais n'est pas applicable lorsque le contenu a une surface supérieure s'étendant en partie au-dessus des bords du contenant, par exemple pour les chargements des bennes de véhicules. Le brevet EP-A-2493714 décrit un système d'enroulement/déroulement automatique d'une bâche par déploiement d'une chambre gonflable et permet de couvrir des contenants dont le contenu a une surface supérieure non plane. Néanmoins, le dispositif de bâchage décrit dans cette demande de brevet demeure encombrant puisqu'il est nécessaire de disposer de suffisamment d'espace pour fixer le rouleau de bâche. De plus le déploiement est aléatoire et le pliage est peu ordonné.

Il est également connu des dispositifs dans lesquels la bâche est fixée sur des arceaux transversaux et mobiles selon une direction du contenant. Lorsque le contenant est découvert les arceaux sont regroupés à l'une des extrémités du contenant. Lorsque le contenant devra être couvert, les arceaux vont être déplacés le long du contenant de sorte que la bâche, pliée en accordéon entre chaque arceau, se déplie et recouvre l'ouverture du contenant. Les arceaux sont en général montés dans des rails ou des cornières ménagés sur le dessus ou les côtés du contenant. En général, le déplacement des arceaux le long du contenant est assuré par un système de câbles/poulies. Ainsi, dans ce dispositif, chaque côté (ou rive) du contenant est équipé d'un câble s'enroulant autour de deux poulies disposées aux extrémités dudit côté et mues par un moteur ou par un dispositif manuel. La rotation des poulies imprime un mouvement rectiligne au câble sur lequel sont fixés les arceaux qui se déplacent le long du contenant en emmenant la bâche pour couvrir ou découvrir le contenant. Tous les éléments mécaniques (câbles, poulies, moteurs...) sont fixés sur les parois extérieures du contenant et sont susceptibles d'être détériorés par leur exposition aux conditions extérieures (poussière, sable, corrosion...), et par les diverses manipulations (chargements et déchargements du contenant) en étant par exemple accrochés ou heurtés ce qui provoquent des dysfonctionnements ou des pannes à répétition. Même s'il est assez aisé de procéder aux réparations, la fréquence de celles-ci augmente fortement le coût de la maintenance et parfois de production en nécessitant l'immobilisation du contenant. En outre, lorsque le contenant est une benne de camion munie de portes arrière pour le déchargement, les poulies doivent être montées sur la partie fixe de la benne située à l'avant de l'articulation des portes, par conséquent dans cette configuration la couverture du contenant n'est pas complète, la toile ou bâche ne pouvant aller jusqu'aux portes, les poulies étant situées devant. La couverture totale du contenant exige alors l'ajout d'une jupe, dont le positionnement nécessite des manipulations supplémentaires assez mal aisées.

Une variante de ce système consiste à fixer directement aux arceaux un boyau pneumatique qui en s'emplissant d'air va provoquer le déplacement des arceaux tel que décrit dans le brevet US 4,342,480.

De tels dispositifs ont parfois tendance à se bloquer. En effet, il est indispensable que le déplacement des arceaux soit le plus régulier et le plus symétrique possible le long des rives sous peine de voir les arceaux se coincer. Cette solution de couverture bien que mécaniquement simple présente ainsi plusieurs inconvénients parmi lesquels le montage délicat des poulies ou la fixation du boyau sur les arceaux, la couverture partielle du contenant lorsque celui-ci est muni de portes arrière, l'obligation de retirer le câble lorsque l'ouverture du contenant est latérale et l'exposition aux détériorations des éléments mécaniques et ou. En outre, quel que soit le système (câbles/poulies ou boyau pneumatique) il est difficile d'obtenir un déplacement des arceaux parfaitement régulier et identique le long de chacune des deux rives du contenant.

D'autres solutions de bâchage existent. A titre d'exemples on peut citer le bâchage par vérin. La bâche est fixée sur un cadre relevé ou abaissé au moyen d'un vérin. Cette solution n'est applicable que pour des contenants de petite taille, lorsque les dimensions sont supérieures au mètre, les risques de prise au vent de la bâche provoquant le déchirement de celle-ci voire le renversement du contenant sont trop importants. En outre, les vérins qu'il faudrait utiliser pour équiper des contenants de taille moyenne à grande sont trop lourds et encombrants.

Un autre système consiste à utiliser des chaines autobloquantes. Ici, deux des côtés opposés du contenant sont équipés chacun d'une chaine à l'extrémité de laquelle la bâche est fixée. Cette chaine à plat pousse le premier arceau puis l'ensemble des autres arceaux pour couvrir le contenant, et ce, sans l'aide de câbles. Dans l'autre sens, c'est-à-dire pour découvrir le contenant, la chaîne s'enroule sur une bobine et ramène ainsi les arceaux. Ce système nécessite un guidage précis, il devient très vite inopérant dans des environnements poussiéreux (les particules s'immiscent dans les maillons de la chaîne et bloquent sa progression), en outre la bobine a un encombrement important pour lequel l'espace n'est pas toujours disponible. Dans le cas de bassin, cela nécessite un génie civile important.

On peut également citer le dispositif décrit dans le brevet US-A-2807499 dans lequel la bâche se déploie sur un cadre fixé sur le contenant au moyen de boyaux qui s'emplissent d'air et qui se replie une fois l'air évacué grâce à des bandes de rappel élastiques. Ce dispositif impose de fixer manuellement la bâche sur les quatre côtés du contenant pour éviter que les bandes élastiques ne provoquent le repliement lorsque le contenant est couvert. En outre, il est nécessaire que le contenant soit équipé d'un cadre ce qui complique le chargement de celle-ci par le dessus.

Ainsi malgré la diversité des dispositifs existants, il n'existe pas de dispositif de bâchage automatisé universel, peu encombrant, robuste, fiable, rapide et facile à manipuler pour l'opérateur permettant la couverture complète d'un contenant de grandes dimensions, quel qu'en soit le contenu, que ce dernier ait une surface plane (comme de l'eau par exemple) ou non (comme des céréales, de la terre ou des déchets) et ce, tout en préservant la facilité de chargement.

### OBJET DE L'INVENTION

Un but de l'invention est de fournir un dispositif automatisé de couverture d'un contenant avec une bâche ne présentant pas au moins certains des inconvénients précités.

### RESUME DE L'INVENTION

A cet effet, on prévoit, selon l'invention un dispositif automatisé de couverture d'une ouverture d'un contenant, comprenant :
des arceaux, dont un premier arceau, enjambant le contenant pour avoir des extrémités reçues dans des guides s'étendant le long de deux côtés opposés du contenant pour être déplaçables le long desdits guides,
une bâche supportée par les arceaux et ayant un bord fixé à une extrémité du contenant et un bord opposé libre solidaire du premier arceau,
des moyens de déploiement de la bâche entre une position pliée dans lequel la bâche forme un accordéon et une position dépliée dans laquelle la bâche couvre l'ouverture du contenant.

Selon l'invention, lesdits moyens de déploiement comprennent au moins un boyau souple solidaire de la bâche et un organe de mise sous pression du boyau de telle manière qu'au fur et à mesure de sa mise sous pression le boyau se déploie parallèlement au guide en provoquant le déploiement de la bâche, ce qui entraîne, via la bâche, le déplacement des arceaux le long des guides, le dispositif comprenant des moyens de contrôle de la vitesse de déploiement de la bâche.

Ainsi, selon l'invention, la couverture du contenant par le déploiement de la bâche est réalisée par le fonctionnement des moyens de déploiement. La mise sous pression du boyau souple provoque son raidissement qui va avoir deux fonctions :
- déformer et positionner la bâche pour l'amener dans son état déployé, et
- entraîner, via la bâche, les arceaux le long du guide.

La mise sous pression du boyau permet de la sorte de couvrir le contenant avec la bâche d'une manière rapide et régulière, avec des efforts relativement limités.

Selon une première caractéristique particulière de l'invention, lesdits moyens de contrôle comprennent au moins un câble lié à au moins un arceau et enroulé autour d'un treuil piloté pour réguler la vitesse de déploiement de la bâche, ledit câble étant totalement enroulé autour du treuil lorsque la bâche est en position pliée et au moins partiellement déroulé lorsque la bâche est en position dépliée.

L'enroulement ou le déroulement dudit câble autour du treuil permet ainsi de contrôler le déplacement des arceaux le long des côtés opposés du contenant lors du déploiement ou du repliement de la bâche en régulant la vitesse de déplacement des arceaux quelle que soit la vitesse de déploiement de la bâche imposée par le fonctionnement des moyens de déploiement de la bâche. Ainsi, le déploiement de la bâche est réalisé par la mise sous pression du boyau solidaire de la bâche, ce qui entraîne le déplacement des arceaux dont la vitesse de déplacement est régulée par le déroulement des câbles par le treuil. Lors du repliement de la bâche, le boyau est vidangé de son air, le câble va s'enrouler autour du treuil et générer le déplacement des arceaux de l'arrière du contenant vers l'avant et ainsi entraîner les arceaux qui y sont liés de sorte à plier la bâche et découvrir le contenant.

Le déroulement du câble par le treuil permet le contrôle du déplacement des arceaux. Le déploiement de la bâche se fait ainsi à vitesse contrôlée et régulière. A l'inverse, lorsque le contenant sera découvert, la bâche sera repliée en ramenant les arceaux dans leur position d'origine par enroulement du câble autour du treuil alors que les moyens de déploiement seront rendus inopérants (lors du repliement de la bâche le boyau souple n'est plus sous pression).

De préférence, les moyens de contrôle comprennent deux câbles liés au moins au premier arceau, un premier câble étant lié à une première extrémité dudit arceau et le deuxième câble étant lié à la seconde extrémité de l'arceau, de part et d'autre de l'ouverture du contenant. Avantageusement, chacun des deux câbles relie chaque arceau entre eux par l'une de leurs deux extrémités situées d'un même côté du contenant.

Selon une deuxième caractéristique particulière de l'invention, les moyens de mise sous pression du boyau comportent une alimentation générale délivrant un fluide sous pression alimentant une entrée de fluide du boyau comprenant des moyens de fermeture sélectifs de l'entrée de fluide, lesdits moyens de mise sous pression comportant en outre des moyens d'évacuation du fluide contenu dans le boyau. De préférence, les moyens de déploiement comportent au moins deux boyaux, solidaires de la bâche, parallèles entre eux et parallèles aux rives longitudinales du contenant, lesdits boyaux étant situés de part et d'autre de la bâche, au plus près des extrémités des arceaux.

Selon une troisième caractéristique particulière de l'invention, l'extrémité de l'arceau est en forme de crochet ou fixée à une pièce additionnelle en forme de crochet conformées de telle sorte que la partie en crochet s'engage dans un guide, formé de manière préférentielle par une cornière. Le crochet permet au dispositif automatisé de couverture de ne pas s'envoler du contenant lorsque le contenant est déplacé. De plus, de manière préférentielle, les crochets peuvent être dotés d'une roulette qui roule sur les rives du contenant. De préférence encore, le crochet est muni d'un ressort pour compenser la déformation en largeur du contenant lorsqu'il est chargé. Ainsi, le ressort compense les variations en largeur du contenant et la roulette maintient le crochet et donc l'extrémité de l'arceau contre la rive. Par conséquent, le guidage des arceaux est réalisé non seulement par la cornière mais aussi par la roulette montée sur ressort.

Avantageusement, la bâche est agencée pour, dans sa position dépliée, couvrir totalement l'ouverture du contenant et former un rabat couvrant au moins partiellement au moins l'un des côtés du contenant, en particulier, le côté du contenant parallèle aux arceaux et opposé au côté sur lequel est fixé la bâche.

Le dispositif peut comporter en outre un dispositif d'arrimage au contenant de la bâche dépliée.

Ainsi, le dispositif de couverture selon l'invention est complètement automatisé, il est peu encombrant, esthétique et sûr puisque le dispositif est intégré à la bâche, il est adapté à toutes les tailles de contenant et à toutes les conditions d'usage (poussière, humidité...). Le dispositif peut être fixé sur un cadre qui pourra ensuite équiper tout type de contenant. La mise en fonctionnement des moyens de déploiement permet de couvrir la totalité du contenant en déployant la bâche sur la totalité de sa longueur. En outre, lorsque le contrôle du déploiement et du repliement de la bâche est réalisé par l'enroulement/déroulement synchronisé autour du treuil des câbles sur lesquels sont fixés les arceaux, le contrôle permet d'obtenir un déplacement régulier et parfaitement parallèle le long des deux rives limitant ainsi les risques de blocage du système. Ainsi, le dispositif conforme à l'invention est esthétique, peu encombrant, fiable, rapide, autonome, facile et sans danger à manipuler pour l'opérateur qui peut commander le fonctionnement du dispositif à travers une commande à distance.

D'autres caractéristiques et avantages de l'invention ressortiront à la lecture de la description qui suit d'un mode de réalisation privilégié non limitatif de l'invention.

### BREVE DESCRIPTION DES DESSINS

Il sera fait référence aux dessins annexés, parmi lesquels :
[Fig.1] la figure 1 est une vue schématique et en perspective du dispositif automatisé de couverture d'une ouverture d'un contenant conforme à l'invention, la bâche étant en position partiellement repliée, l'ouverture du contenant étant partiellement découverte ;
[Fig.2] la figure 2 est une vue de détail d'une extrémité d'un arceau lié au câble, ladite extrémité étant engagée dans un guide ;

### DESCRIPTION DETAILLEE DE L'INVENTION

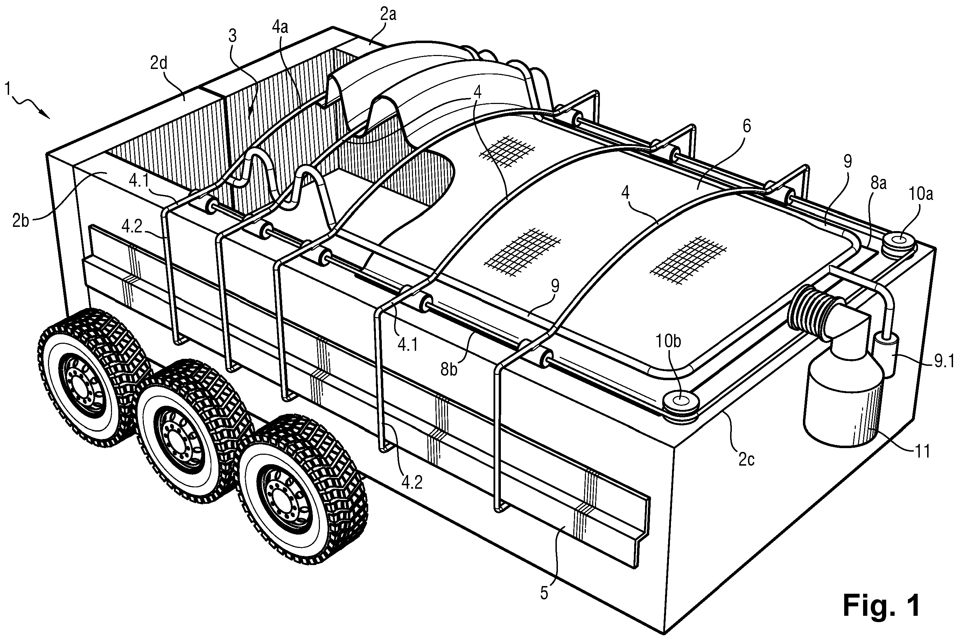

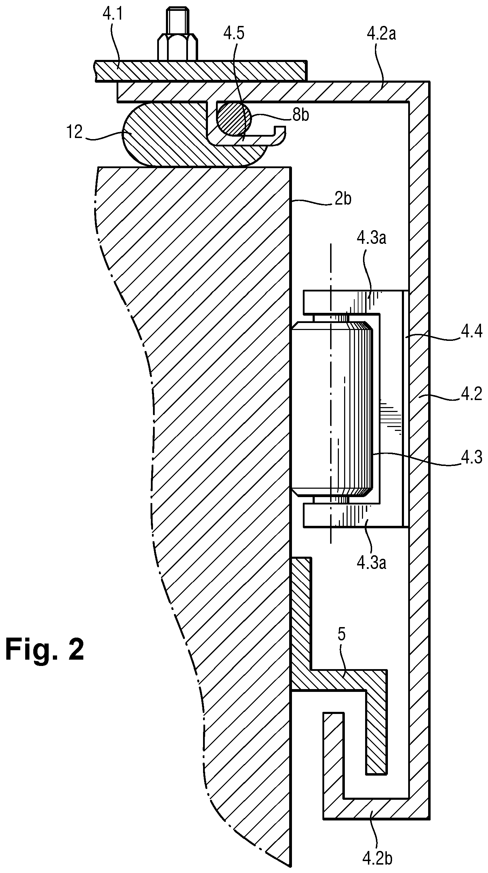

En référence aux figures 1 et 2, l'invention concerne un dispositif automatisé de couverture d'un contenant. Dans la présente description, on entend par « contenant » tout contenant de type plateau, benne, silo, bassin, etc... de forme rectangulaire ou carré, posé sur le sol, totalement ou partiellement enterré, ou posé sur une remorque tractée, ou monté sur un châssis de véhicule... Le contenant peut contenir tout type de contenu, solide ou liquide. A titre d'exemples, il peut s'agir d'eau lorsque le contenant est un bassin ou une piscine ou, lorsque le contenant est une benne ou un silo, de la terre, du sable, des céréales, des gravats, des déchets ou tout autre matériau solide.

Selon un mode particulier de réalisation de l'invention, le contenant 1 est ici une benne destinée à être posée sur un châssis de véhicule et destinée à transporter principalement des matériaux solides, de type céréales. Ainsi, le contenant 1 est constitué de quatre rives parallèles deux à deux 2a, 2b, 2c, 2d, les rives longitudinales 2a, 2b formant la longueur du contenant, les rives transversales 2c, 2d formant la largeur du contenant. Ici, et à titre d'illustration, le contenant 1 possède des rives longitudinales de 1100 cm et des rives transversales de 230 cm. Par convention, la rive transversale 2c est appelée rive transversale avant et la rive transversale 2d rive transversale arrière. L'ensemble des rives délimite une ouverture 3, supérieure, dans un plan parallèle au fond du contenant. Les rives latérales et/ou transversales peuvent être formées par un ou plusieurs panneaux, lesdits panneaux pouvant être fixes ou articulés de sorte que la rive comprenant un ou plusieurs panneaux articulés forme une porte latérale ou arrière, utilisée pour le chargement et le déchargement du contenu.

Selon un mode particulier de réalisation de l'invention, le dispositif de couverture automatisé de l'ouverture du contenant 1 comprend des arceaux 4, dont un premier arceau 4a, situé près de la rive transversale arrière 2d lorsque le contenant est couvert. Lesdits arceaux sont parallèles aux rives transversales 2c, 2d et sensiblement perpendiculaires aux rives longitudinales 2a, 2b. Les arceaux enjambent l'ouverture du contenant 3 d'une rive longitudinale 2a à l'autre 2b pour avoir chacun leurs extrémités 4.1 reçues dans des guides 5 (dont un seul est visible sur la figure) s'étendant respectivement le long desdites rives transversales de sorte que les arceaux soient déplaçables le long desdits guides 5. Les guides sont ici des cornières fixées sur les faces latérales extérieures des rives longitudinales 2a, 2b. L'homme du métier saura choisir et positionner les guides en fonction notamment du contenant. A titre d'exemple, il pourra à la place de cornières utiliser des rails et fixer le guide à l'intérieur ou à l'extérieur de la rive 2a, 2b ou alors directement former le guide dans la rive 2a, 2b. Ainsi, l'arceau dont l'extrémité est engagée dans le guide, ne se déformera pas lors de son déplacement.

Selon un mode privilégié de réalisation de l'invention, l'arceau est réalisé en acier galvanisé et a une hauteur variable allant de 20cm à 40 cm. L'homme du métier saura dimensionner les arceaux et en déterminer le nombre, en fonction de la destination du contenant, de sa longueur et du poids supporté par lesdits arceaux.

Selon l'invention, les extrémités 4.1 des arceaux 4 ont une forme de crochet. De manière préférentielle, les extrémités 4.1 comprennent ici chacune une pièce 4.2 en forme de C rapportée sur le reste de l'arceau, comme illustré dans la figure 2. Qu'il soit réalisé par l'extrémité de l'arceau ou par l'ajout d'une pièce en forme de C, le crochet est conformé de telle sorte qu'il s'engage dans la cornière 5. Dans le cas de l'utilisation d'une pièce 4.2 en forme de C, une première branche du C 4.2a est fixée à l'extrémité 4.1 de l'arceau par tous moyens, ici par vissage, mais ce pourrait aussi être par boulonnage ou soudage. La première branche 4.2a comprend en outre une goulotte 4.5 dans lequel passe un câble 8. Une seconde branche du C 4.2b présente une forme de crochet apte à s'engager dans la cornière 5 de telle sorte que l'arceau soit ainsi guidé par la cornière lors de son déplacement. La pièce en forme de C 4.2 peut en outre être dotée d'un galet 4.3 fixé par un support 4.3a à l'intérieur du C de telle sorte que le galet vienne en appui contre la rive 2a, 2b et roule le long de celle-ci lors du déplacement de l'arceau. La pièce en forme de C 4.2 et le galet 4.3 doivent être agencés de telle sorte que le galet soit toujours au contact de la rive que le contenant soit vide ou rempli. En effet, lorsque le contenant est plein, les rives peuvent présenter une légère déformation de type enflement. Dans cette situation, la distance entre les deux rives longitudinales 2a, 2b, lorsque le contenant est plein, est légèrement supérieure à la distance entre ces deux mêmes rives lorsque le contenant est vide. Selon un mode particulier de réalisation de l'invention, la déformation des rives est absorbée par un tampon élastique 4.4 placé entre le support 4.3a du galet 4.3 et l'intérieur de la pièce en forme de C 4.2.

Les extrémités 4.1 sont également pourvues d'un patin 12 en un matériau facilitant le glissement des extrémités 4.1 sur les rives longitudinales 2a, 2b.

Selon l'invention, le dispositif automatique de couverture du contenant comprend également une bâche 6 (partiellement écorchée sur la figure 1) qui repose sur les arceaux 4, un des bords de la bâche 6 est fixé à une extrémité du contenant 1, ici, le bord de la bâche 6 est fixé sur la rive transversale avant 2c du contenant. L'homme du métier saura utiliser le moyen de fixation de la bâche le plus adapté, à titre d'exemples non limitatifs la bâche 6 pourra être fixée par des rivets ou pincée entre deux barres qui seront elles-mêmes vissées sur la rive transversale avant. Le bord opposé libre de la bâche est solidaire du premier arceau 4a. La bâche est ici réalisée en PVC (650 g/m²). L'homme du métier saura adapter le matériau de la bâche 6, son épaisseur et ses dimensions en fonction du contenant à couvrir et du chargement qu'il est destiné à accueillir.

L'homme du métier saura utiliser les moyens de solidarisation de la bâche aux arceaux en fonction du matériau de celle-ci et des dimensions des arceaux. A titre d'exemples non limitatifs, la bâche 6 pourra être équipée de liens, de passants ou de fourreaux à travers lesquels passeront les arceaux.

Conformément à l'invention, le dispositif comprend également des moyens de déploiement de la bâche 6 entre une position pliée dans lequel la bâche 6 forme un accordéon, ici entre les arceaux 4 lorsqu'ils sont rassemblés contre la rive transversale avant 2c du contenant 1 et une position dépliée dans laquelle la bâche 6 couvre l'ouverture 3 du contenant 1, le premier arceau 4a se trouvant près de la rive transversale arrière opposée 2d. A la figure 1, la bâche 6 est représentée dans un état partiellement replié.

Les moyens de déploiement sont ici constitués par au moins un boyau 9, souple, solidaire de la bâche, ladite bâche étant fixée à intervalles réguliers aux arceaux 4 et un organe de mise sous pression. Selon un mode privilégié de réalisation de l'invention, les moyens de déploiement comprennent deux boyaux 9 parallèles entre eux et parallèles aux rives longitudinales du contenant, lesdits boyaux 9 étant situés de part et d'autre de la bâche, au plus près des extrémités des arceaux. Ainsi, au fur et à mesure que chaque boyau 9 est mis sous pression, il se raidit et provoque le déploiement de la bâche et le déplacement des arceaux.

Plus précisément, la mise sous pression des boyaux 9 est réalisée par une alimentation générale délivrant un fluide sous pression alimentant une entrée 9.1 des boyaux.

L'alimentation générale peut être obtenue par une bonbonne d'air ou un groupe compresseur autonome qui délivre de l'air sous pression de 7 à 10 bars environ. Les boyaux 9 ont une extrémité opposée à l'entrée 9.1 qui est fixée à l'arceau 4a.

Chaque boyau 9 est ici réalisé en une matière étanche et est pourvu à son entrée 9.1 de moyens de pilotage sélectifs de fermeture de l'entrée de fluide et de sortie d'évacuation du fluide. En outre, les moyens de fermeture sélectifs comportent des moyens d'évacuation du fluide contenu dans le boyau 9. L'homme du métier est à même d'utiliser tout dispositif de pilotage sélectif, à titre d'exemple ce peut être un dispositif de type distributeur pneumatique ou une vanne manuelle.

Selon l'invention, chaque boyau 9 est solidaire de la bâche 6. L'homme du métier pourra solidariser les boyaux 9 à la bâche 6 par tout moyen selon les matériaux utilisés pour la bâche 6 et les boyaux 9, ce pourra être à titre d'exemple par collage, soudure. Les boyaux 9 peuvent également avoir la forme de canaux ménagés dans l'épaisseur de la bâche 6. De manière préférentielle, la bâche 6 comporte deux boyaux parallèles entre eux, situés de part et d'autre de la bâche à proximité des roulettes.

De manière avantageuse, la bâche 6 est préformée en accordéon.

Le dispositif de déploiement de la bâche 6 conforme à l'invention couvre totalement l'ouverture 3 du contenant 1 en allant par exemple au-delà des articulations des portes arrière s'il y en a et forme un rabat au moins en aplomb de la rive transversale arrière 2d. On peut prévoir à cette fin que le rabat soit solidaire de l'arceau 4a et que les boyaux s'étendent légèrement au-delà de cet arceau 4a pour pousser le rabat par-dessus la rive transversale arrière 2d.

Conformément à l'invention, le dispositif comprend en outre des moyens de contrôle de déploiement de la bâche. Selon un mode privilégié de réalisation de l'invention, les moyens de contrôle comprennent un treuil 11 fixé sensiblement au milieu de la rive transversale avant 2c autour duquel s'enroulent deux câbles 8a, 8b. Le treuil comprend un tambour entraîné en rotation par un moteur relié via un circuit électronique de commande à une source d'alimentation en énergie électrique. Le circuit électronique de commande permet ici de régler de manière active la vitesse d'enroulement et de déroulement des câbles. Lors du déroulement des câbles, le moteur se comporte comme un générateur et le circuit de commande comprend ici une résistance pour dissiper l'énergie produite pendant cette phase et ralentir la rotation du câble. La résistance est dimensionnée après des essais réalisés en usine pour obtenir la vitesse de déploiement souhaitée de la bâche. En variante, le circuit de commande peut comprendre plusieurs résistances dissipatrices qui peuvent être sélectivement raccordées pour procurer plusieurs niveaux de freinage du tambour. Ceci est par exemple utile lorsque le dispositif peut être utilisé avec des bâches de masses ou de souplesses différentes.

Les deux câbles 8a, 8b sont agencés pour s'étendre de part et d'autre du contenant 1 chacun le long d'une rive longitudinale 2a, 2b lorsque la bâche est déployée. Les extrémités 4.1 des arceaux 4 sont pourvues de logement 4.5 dans lesquels passent librement les câbles. Les câbles 8a et 8b ont néanmoins une extrémité fixée aux moyens de vis ou de serre-câble aux extrémités 4.1 du premier arceau 4a de sorte que les extrémités du premier arceau 4a et le câble 8a, 8b soient solidaires entre eux, ce qui permettra de ramener le premier arceau 4a avant puis les autres arceaux lors du repliement de la bâche et de contrôler la vitesse et la régularité du déplacement des arceaux 4 lors du déploiement de la bâche. Les autres arceaux peuvent comprendre des passages de câble recevant chacun un des câbles de telle manière que celui-ci puisse coulisser librement dans le passage.

Le passage du câble 8a, 8b de la rive transversale 2c à la rive longitudinale 2a, 2b est réalisé au moyen d'une poulie 10a, 10b de renvoi fixée dans l'angle formé par la jonction de la rive transversale 2c avec la rive longitudinale 2a ou 2b. Les câbles 8a, 8b s'étendent ainsi dans un plan sensiblement parallèle au fond du contenant 1 et chacun des câbles 8a, 8b court autour de l'ouverture 3 à partir du treuil 11 le long de la rive transversale 2c, passe par la poulie 10a, 10b puis relie les arceaux 4 le long de chacune des deux rives longitudinales 2a, 2b. Ainsi, lorsque la bâche 6 est en cours de déploiement, les câbles 8a, 8b sont simultanément et de manière synchronisée, déroulés du treuil 11, et les arceaux 4 sont déplacés le long des rives longitudinales jusqu'à être répartis au-dessus de l'ouverture 3 du contenant 1 le long des rives longitudinales, le premier arceau se trouvant près de la rive transversale arrière 2d. Le déroulement des câbles par le treuil 11 et la mise sous pression des boyaux 9 vont être réalisés simultanément ce qui va permettre de réguler la vitesse de déploiement de la bâche 6 par le déplacement contrôlé des arceaux le long des rives longitudinales et perpendiculairement à celles-ci, de sorte que le déploiement se fasse de manière régulière et continue sans les éventuels à-coups provoqués par le passage de l'air dans le boyau plié. A l'inverse, lors du repliement de la bâche 6, l'enroulement des câbles 8a, 8b autour du tambour du treuil 11 permet de ramener les arceaux 4 dans leur position initiale tout en contrôlant leur déplacement, et ce, en conservant les arceaux 4 parfaitement parallèles entre eux et aux rives transversales.

Ainsi, selon un mode de réalisation privilégié de l'invention, pour couvrir le contenant 1, l'opérateur va, au moyen d'un boîtier de commande, actionner simultanément les moyens de déploiement, en l'espèce l'organe de mise sous pression qui va délivrer un fluide (ici de l'air) sous pression par l'entrée 9.1 des boyaux 9 et les moyens de contrôle de déploiement, en l'espèce le treuil qui va dérouler le câble. Ainsi, au fur et à mesure que le boyau va se gonfler et que les câbles seront déroulés par le treuil, la bâche 6 va se déployer et les arceaux 4 vont se déplacer le long des guides 5, de la rive transversale avant 2c à la rive transversale arrière 2d, en restant parallèles auxdites rives transversales de sorte à couvrir complètement l'ouverture 3 du contenant 1. Une fois les boyaux 9 complètement gonflés, l'alimentation en fluide est coupée par exemple par un dispositif de capteur de pression. Le premier arceau 4a est alors au niveau de la rive transversale arrière 2d du contenant 1. Afin d'assurer la couverture complète du contenant, l'opérateur pourra fixer manuellement le bord libre de la bâche 6 (formant ainsi rabat ou jupe) sur la rive transversale arrière et/ ou sur les extrémités distales des rives latérales, par exemple au moyen d'élastique liant des œillets ménagés dans la bâche à des crochets placés sur la rive transversale arrière 2d.

Le dispositif peut comporter en outre un dispositif d'arrimage de la bâche au contenant lorsqu'elle est dépliée, ledit dispositif pouvant être manuel ou automatique.

Lors de l'opération inverse, lorsqu'il s'agira de découvrir le contenant, le boyau sera vidangé de son air par un distributeur automatique mettant le circuit à la pression atmosphérique et se trouvera ainsi dégonflé. L'opérateur actionnera au moyen du boîtier de commande le treuil 11 pour enrouler les câbles 8a, 8b, qui en s'enroulant autour du tambour du treuil 11, vont tirer l'arceau 4a qui va ramener les arceaux 4 contre la rive transversale avant 2c et ainsi replier la bâche en accordéon. La présence de deux câbles 8a, 8b de part et d'autre de chaque arceau 4, 4a permet de conserver un mouvement desdits arceaux 4, 4a parfaitement rectiligne et uniforme le long des deux rives longitudinales.

Ainsi, le déploiement de la bâche 6 et son repliement sont réalisés rapidement par la mise sous pression des boyaux et leur vidange mais de manière parfaitement contrôlée et fiable grâce au contrôle du déplacement des arceaux le long des guides par le déroulement/enroulement des câbles 8a, 8b.

Le dispositif automatisé de couverture d'une ouverture d'un contenant conforme à l'invention est peu encombrant, rapide et fiable. Il permet ainsi à l'opérateur de couvrir simplement le contenant sans manipulation dangereuse (nul besoin de monter sur le contenant) et sans craindre de blocage des arceaux au cours du processus.

Selon un mode alternatif de réalisation de l'invention, le dispositif peut être également conçu pour être autonome et autoportant. Selon cette variante de l'invention, le dispositif est monté non pas sur un contenant mais sur un cadre rectangulaire comprenant quatre côtés parallèles deux à deux, deux d'entre eux formant les longueurs du cadre et les deux autres perpendiculaires aux précédents formant les largeurs du cadre. Comme précédemment, le dispositif selon cette variante comprend des arceaux, une bâche, des moyens de déploiement de la bâche et des moyens de contrôle de déploiement de la bâche. Selon cette variante de l'invention, les arceaux enjambent le cadre pour avoir des extrémités reçues dans des guides s'étendant le long de deux côtés opposés du cadre pour être déplaçables le long desdits guides. Les guides sont ici formés par des rails ménagés dans les longueurs du cadre et dans lesquels viendront s'engager les extrémités des arceaux prévues à cet effet, à titre d'exemple non limitatif, les extrémités des arceaux peuvent être équipées de roulettes pour assurer un meilleur guidage sur des contenants déformés. Les autres composants du dispositif, bâche, moyens de déploiement et moyens de contrôle du déploiement sont identiques à ceux décrits dans le premier mode de réalisation de l'invention. Ainsi, le cadre équipé du dispositif de couverture conforme à l'invention pourra être fixé sur un contenant ou posé à même le sol pour couvrir un bassin, une piscine ou un tas de matière ou fixé sur une remorque plateau.

Bien entendu, l'invention n'est pas limitée au mode de réalisation décrit mais englobe toute variante entrant dans le champ de l'invention telle que définie par les revendications.

En particulier, le moyen de contrôle peut avoir une structure différente de celle décrite. Il peut ne comprendre qu'un seul treuil associé à un ou plusieurs câbles, ou plusieurs treuils associés chacun à un ou plusieurs câbles. Par exemple, on utilisera deux treuils autour de chacun desquels est enroulé un câble. Il conviendra de synchroniser la vitesse de fonctionnement des deux treuils afin que les câbles soient enroulés ou déroulés à la même vitesse.

Dans une variante plus rustique, on peut prévoir un frein à friction pour limiter la vitesse de rotation du moteur du treuil lors du déroulement du câble en dehors de toute alimentation du moteur d'entrainement du tambour. Le moyen de contrôle peut être réglable en usine ou en utilisation pour par exemple permettre d'adapter le dispositif à des arceaux et des bâches de poids différents.

Le dispositif tel que décrit comprend deux boyaux parallèles aux rives longitudinales mais il peut comprendre un unique boyau ou plus de deux. Les boyaux peuvent être parallèles entre eux ou s'étendre en éventail.

Les boyaux peuvent être collés à la bâche, soudés à celle-ci si la bâche et les boyaux sont en matériaux thermofusibles, fixés à la bâche par des passants ou des languettes cousus à la bâche...

Le dispositif tel que décrit comprend des crochets dotés d'un galet et d'un tampon mais il peut comprendre tout dispositif alternatif permettant d'amortir les variations de largeur du contenant. Par exemple, le galet peut être réalisée en matériau caoutchouteux souple ou le tampon peut être remplacé par une lamelle ou un ressort.

La bâche une fois complètement déployée vient au moins en aplomb de la rive transversale arrière mais elle peut être plus longue de sorte à former un rabat qui pourra être fixé à la rive transversale arrière de sorte à couvrir la totalité du contenu présent dans le contenant.

La bâche 6 peut reposer sur les arceaux ou être suspendue à ceux-ci.

## Revendications

1. Dispositif automatisé de couverture d'une ouverture (3) d'un contenant (1), le dispositif comprenant :
• des arceaux (4), dont un premier arceau (4a), agencés pour enjamber l'ouverture du contenant et avoir des extrémités reçues dans des guides (5) s'étendant le long de deux côtés opposés du contenant (2a, 2b) de manière à être déplaçables le long desdits guides,
• une bâche (6) portée par les arceaux (4) et ayant un bord fixé à une extrémité du contenant et un bord opposé libre solidaire du premier arceau (4a),
• des moyens de déploiement de la bâche (6) entre une position pliée en accordéon et une position dépliée pour recouvrir l'ouverture du contenant ;
**caractérisé en ce que** lesdits moyens de déploiement comprennent au moins un boyau souple (9) solidaire de la bâche et un organe de mise sous pression (10) du boyau de telle manière qu'au fur et à mesure de sa mise sous pression le boyau se déploie parallèlement au guide (5) en provoquant le déploiement de la bâche, ce qui entraine, via la bâche, le déplacement des arceaux le long des guides et **en ce que** le dispositif comprend des moyens de contrôle d'une vitesse de déploiement de la bâche

2. Dispositif selon la revendication 1, dans lequel les moyens de contrôle de déploiement de la bâche comprennent au moins un câble (8) lié à au moins un arceau (4a) et enroulé autour d'un treuil, ledit câble (8) étant totalement enroulé autour du treuil lorsque la bâche est en position pliée et au moins partiellement déroulé lorsque la bâche est en position dépliée.

3. Dispositif selon la revendication 2, dans lequel les moyens de contrôle de déploiement de la bâche comprennent deux câbles (8a, 8b).

4. Dispositif automatisé de couverture d'un contenant (1) selon l'une des revendications 1 à 3, dans lequel les moyens de mise sous pression comportent une alimentation générale délivrant un fluide sous pression alimentant une entrée de fluide du boyau comprenant des moyens de fermeture sélectifs de l'entrée de fluide qui comportent en outre des moyens d'évacuation du fluide contenu dans le boyau.

5. Dispositif automatisé de couverture d'un contenant (1) selon la revendication 1, dans lequel l'extrémité de l'arceau est en forme de crochet conformé de telle sorte à ce que ledit crochet s'engage dans un guide (5).

6. Dispositif automatisé de couverture d'un contenant selon la revendication 1, dans lequel chaque extrémité (4.1) de l'arceau (4) est fixée à une pièce (4.2) en forme de C formant crochet.

7. Dispositif automatisé de couverture d'un contenant selon les revendications 5 ou 6, dans lequel l'extrémité de l'arceau (4.1) ou la pièce en forme de C formant crochet (4.2) est dotée d'un galet (4.3) en appui contre la rive (2a, 2b).

8. Dispositif automatisé de couverture d'un contenant selon la revendication 7, dans lequel l'extrémité de l'arceau (4.1) ou la pièce en forme de C formant crochet (4.2) est dotée d'un tampon élastique (4.4).

9. Dispositif automatisé de couverture d'un contenant (1) selon la revendication 1, dans lequel la bâche (6) est agencée pour, dans sa position dépliée, couvrir totalement l'ouverture (3) du contenant (1).

10. Dispositif de couverture automatisé d'un contenant selon la revendication 1, comprenant un cadre support adaptable sur le contenant pour s'étendre autour de l'ouverture, les arceaux étant montés sur ledit cadre et les guides étant solidaires du cadre.

## Patentansprüche

1. Automatisierte Abdeckvorrichtung zum Abdecken einer Öffnung (3) eines Behälters (1), wobei die Vorrichtung umfasst:
• Bügel (4), darunter einen ersten Bügel (4a), welche derart ausgelegt sind, dass sie die Öffnung des Behälters überbrücken und Enden aufweisen, welche in Führungen (5) aufgenommen sind, die sich entlang zweier gegenüberliegender Behälterseiten (2a, 2b) erstrecken, sodass besagte Bügel entlang der Führungen verschiebbar sind,
• eine von den Bügeln (4) getragene Plane (6), die einen an einem Ende des Behälters befestigten Rand sowie einen fest mit dem ersten Bügel (4a) verbundenen, entgegengesetzten freien Rand aufweist,
• Planenausbreitungsmittel zur Ausbreitung der Plane (6) zwischen einer faltenbalgartig zusammengefalteten Stellung und einer entfalteten Stellung, in welcher die Öffnung des Behälters abgedeckt ist;
**dadurch gekennzeichnet, dass** die Planenausbreitungsmittel zumindest einen fest mit der Plane verbundenen flexiblen Schlauch (9) sowie ein Druckbeaufschlagungsorgan (10) umfassen, welches den Schlauch derart mit Druck beaufschlagt, dass sich der Schlauch mit zunehmender Druckbeaufschlagung parallel zu der Führung (5) in die Länge streckt, was zu der Ausbreitung der Plane und über die Plane zu einer Verfahrbewegung der Bügel entlang der Führungen führt, und dass die Vorrichtung Steuerungsmittel zur Steuerung einer Ausbreitungsgeschwindigkeit der Plane umfasst.

2. Abdeckvorrichtung nach Anspruch 1, wobei die Planenausbreitungs-Steuerungsmittel zumindest ein mit mindestens einem Bügel (4a) verbundenes Seil (8) umfassen, das auf einer Seilwinde aufspult ist, wobei das Seil (8) zur Gänze auf der Seilwinde aufgespult ist, wenn sich die Plane in der zusammengefalteten Stellung befindet, und zumindest teilweise abgespult ist, wenn sich die Plane in der entfalteten Stellung befindet.

3. Abdeckvorrichtung nach Anspruch 2, wobei die Planenausbreitungs-Steuerungsmittel zwei Seile (8a, 8b) umfassen.

4. Automatisierte Abdeckvorrichtung zum Abdecken eines Behälters (1) nach einem der Ansprüche 1 bis 3, wobei die Druckbeaufschlagungsmittel eine allgemeine Versorgungseinrichtung umfassen, die ein unter Druck stehendes Fluid bereitstellt, mit dem ein Fluideinlass des Schlauchs versorgt wird, welcher selektive Verschlussmittel zum Verschließen des Fluideinlasses umfasst, die ferner Fluidablassmittel zum Ablassen des in dem Schlauch enthaltenen Fluids umfassen.

5. Automatisierte Abdeckvorrichtung zum Abdecken eines Behälters (1) nach Anspruch 1, wobei das Ende des Bügels die Form eines Hakens aufweist, welcher derart ausgebildet ist, dass der Haken in eine Führung (5) eingreift.

6. Automatisierte Abdeckvorrichtung zum Abdecken eines Behälters nach Anspruch 1, wobei jedes Ende (4.1) des Bügels (4) an einem C-förmigen Hakenteil (4.2) befestigt ist.

7. Automatisierte Abdeckvorrichtung zum Abdecken eines Behälters nach den Ansprüchen 5 oder 6, wobei das Ende (4.1) des Bügels oder das C-förmige Hakenteil (4.2) mit einer Rolle (4.3) versehen ist, die gegen die Bordwand (2a, 2b) in Anlage gehalten wird.

8. Automatisierte Abdeckvorrichtung zum Abdecken eines Behälters nach Anspruch 7, wobei das Ende (4.1) des Bügels oder das C-förmige Hakenteil (4.2) mit einem elastischen Puffer (4.4) versehen ist.

9. Automatisierte Abdeckvorrichtung zum Abdecken eines Behälters (1) nach Anspruch 1, wobei die Plane (6) dafür ausgelegt ist, wenn sie sich in ihrer entfalteten Stellung befindet, die Öffnung (3) des Behälters (1) zur Gänze abzudecken.

10. Automatisierte Abdeckvorrichtung zum Abdecken eines Behälters nach Anspruch 1, umfassend einen Stützrahmen, welcher derart an den Behälter anpassbar ist, dass er sich um die Öffnung herum erstreckt, wobei die Bügel auf dem Rahmen angebracht sind und die Führungen fest mit dem Rahmen verbunden sind.

## Claims

1. Automated device for covering an opening (3) of a container (1), the device comprising:
• roof bows (4), including a first roof bow (4a), arranged to span the opening of the container and have ends received in guides (5) extending along two opposite sides of the container (2a, 2b) so as to be movable along said guides,
• a tarpaulin (6) carried by the roof bows (4) and having an edge fixed to one end of the container and an opposite free edge secured to the first roof bow (4a),
• means for deploying the tarpaulin (6) between an accordion-folded position and an unfolded position to cover the opening of the container;
**characterised in that** said deployment means comprise at least one flexible hose (9) secured to the tarpaulin and a member for pressurizing the hose (10) so that, as it is pressurized, the hose is deployed parallel to the guide (5), causing the tarpaulin to be deployed, thereby causing the roof bows to move along the guides via the tarpaulin, and **in that** the device comprises means for controlling a speed of deployment of the tarpaulin.

2. Device according to claim 1, wherein the means for controlling the deployment of the tarpaulin comprise at least one cable (8) connected to at least one roof bow (4a) and wound around a winch, said cable (8) being fully wound around the winch when the tarpaulin is in the folded position and at least partially unwound when the tarpaulin is in the unfolded position.

3. Device according to claim 2, wherein the means for controlling the deployment of the tarpaulin comprise two cables (8a, 8b).

4. Automated device for covering a container (1) according to any one of claims 1 to 3, wherein the pressurizing means comprise a general supply delivering a pressurized fluid supplying a fluid inlet of the hose comprising means for selectively closing the fluid inlet which further comprise means for evacuating the fluid contained in the hose.

5. Automated device for covering a container (1) according to claim 1, wherein the end of the roof bow is shaped as a hook shaped such that said hook engages in a guide (5).

6. Automated device for covering a container according to claim 1, wherein each end (4.1) of the roof bow (4) is fixed to a C-shaped piece (4.2) forming a hook.

7. Automated device for covering a container according to claim 5 or 6, wherein the end of the roof bow (4.1) or the C-shaped piece (4.2) forming a hook is provided with a roller (4.3) bearing against the side of the container (2a, 2b).

8. Automated container cover according to claim 7, wherein the end of the roof bow (4.1) or the C-shaped hook piece (4.2) is provided with an elastic pad (4.4).

9. Automated device for covering a container (1) according to claim 1, wherein the tarpaulin (6) is arranged to, in its unfolded position, completely cover the opening (3) of the container (1).

10. Device for automatically covering a container according to claim 1, comprising a support frame adaptable on the container to extend around the opening, the roof bows being mounted on said frame and the guides being secured to the frame.
